# EUROPEAN PATENT SPECIFICATION

(11) **EP 0 880 924 B1**
(45) Date of publication and mention of the grant of the patent: **13.03.2002**
(21) Application number: 98201560.4
(22) Date of filing: 13.05.1998
(51) Int. Cl.: A47G 1/16, E04B 9/20, F16B 2/24

(54) **Hanging element**
Aufhänger
Dispositif de suspension

(30) Priority: 13.05.1997 NL 1006034
(43) Date of publication of application: 02.12.1998
(73) Proprietor: Stas, Marinus Barbara Arnoldus Maria, 5527 EC Hapert (NL)
(72) Inventor: Stas, Marinus Barbara Arnoldus Maria, 5527 EC Hapert (NL)
(74) Representative: Valkonet, Rutger

(56) References cited:
- FR-A- 2 571 792
- GB-A- 1 371 631
- US-A- 3 295 812
- US-A- 3 433 121
- US-A- 4 738 424

## Description

The invention relates to a hanging element which is suitable for hanging objects, such as construction elements, paintings and the like, on a suspension wire, which hanging element consists of a strip of a resilient material comprising two resiliently interconnected legs, one end piece of which is provided with a first opening, and the other end piece of which is provided with a second opening, which openings are adapted for passing said suspension wire therethrough, and wherein said hanging element is also provided with means for cooperating with suspension elements of the object.

US patent specification No. 3,295, 812 discloses a clamping element of complicated design which comprises two springing legs, whose recessed end edges are bent over double, whereby said edges push against a horizontally positioned, rigid mounting bar. The drawback of such a clamping element is the fact that its complicated construction and the edges of the recesses, which push against the bar, provide inadequate fixation between the element and the bar. Consequently, the horizontally positioned bar must be passed through a number of openings so as to provide additional support for said bar. Accordingly, a clamping element of this type is only suitable for locally and clampingly supporting horizontally positioned, rigid bars, and it cannot be used as a hanging element on a wire, whereby the clamping edges of the hanging element must provide not only adequate fixation on the suspension wire, but also sufficient carrying capacity for the object to be hung.

Moreover, due to its construction and function, the clamping element according to US-A-3,295,812 is only capable of cooperation with a bar which is rigid in itself. When used on a flexible suspension wire, the element is not capable of wrenching itself. In addition to that, because of the construction of the clamping element, its movement along the rigid wire for the purpose of vertically adjusting the object to be hung is not a user-friendly operation.

The object of the present invention is to obviate the above drawbacks and to provide a hanging element of simple construction, which can be used on any type of suspension wire (flexible or non-flexible), and which furthermore enables a simple and user-friendly adjustment along the suspension wire.

In order to accomplish that objective the hanging element according to the invention is having two resiliently interconnected legs, whereby the end pieces of each of said legs are bent in a direction towards each other, and that said end pieces are resiliently movable in adjacent parallel planes with respect to each other, so that said first and said second opening can be aligned, thus forming a common passage for the suspension wire, and wherein the resilience of the legs functions to minimise the effective diameter of the passage, as a result of which the edges of the two openings clamp round the suspension wire, characterised in that in use the resilience of the legs causes the openings to move away from each other. Since the two openings are not spaced some distance apart, but more or less form a common passage, whereby the resilience of the legs functions to minimise the effective diameter, thus providing the friction contact, and also the carrying capacity of the hanging element, the hanging element according to the invention can be used for all kinds of different types of suspension wires. In addition to that, the hanging element according to the invention, which is of simple construction, enables the user to adjust the element along the suspension wire in a simple manner.

According to one aspect of the invention the hanging element is characterized in that one opening has a sharp edge. This provides an improved friction contact between the edge of the openings and the circumferential surface of the suspension wire, which results in a considerably improved carrying capacity of the hanging element.

According to another aspect of the invention the first and/or the second opening of the hanging element are circular or funnel-shaped. This makes it possible to pass a suspension wire through the passage formed by the two openings in a simple manner, so as to hang an object.

One embodiment of the hanging element according to the invention is characterized in that the funnel-shaped opening converges in the direction of the end edge of the end piece. This makes it possible to pass the suspension wire through the common opening in a simple manner, whilst a proper friction contact between the edges of the openings and the circumferential surface of the suspension wire, and consequently a large carrying capacity, is obtained as a result of the fact that the effective diameter of the passage is minimised due to the resilience of the hanging element.

According to another aspect of the invention the hanging element is characterized in that the converging portion of the funnel-shaped opening terminates in the form of a segment of a circle. In particular the radius of said segment of a circle is thereby smaller than or identical to half the diameter of the suspension wire. Thus, the effective diameter of the passage is more or less circular in use, so that a proper friction contact with the edges of the openings is obtained over the entire circumference of the suspension wire. This provides the hanging element with a large carrying capacity, whilst furthermore unnecessary damage to the suspension wire is avoided as much as possible.

In one embodiment of the hanging element, the first and/or the second end piece may be provided with a notch, which terminates in said opening. As a result of this it is not necessary to pass the suspension wire through the opening when hanging an object, for example a construction element or a painting, but it can simply be hooked into the opening via said notch. The height at which the object is hung can thus be adjusted in a simple manner.

To that end the hanging element according to the invention may be characterized in that the end edge of the end piece is bevelled in the direction of said notch. As a result of this provision, the hanging element will align itself upon being mounted on the suspension wire, which makes it considerably easier to mount and adjust the hanging element on the suspension wire.

Another embodiment of the hanging element is according to the invention characterized in that said hanging element is provided with a third opening for passing the suspension wire therethrough. Said third opening may be spaced equally far apart from said first and from said second opening. This embodiment of the hanging element provides a stable construction for hanging an object, such as a construction element or a painting.

Another embodiment of the hanging element is according to the invention characterized in that said hanging element is provided with a lip which extends transversely to said strip, which lip is intended for cooperation with the suspension elements of the object. Said lip may be provided at the location of said first or said second and/or said third opening. Also in this manner a stable construction as well as a simple cooperation with the suspension elements of the object is obtained.

The hanging element may be fixedly connected to an object. The objects thus obtained, for example a painting, thus offers the user an attractive additional function, whilst said object can also be hung from a suspension wire and be adjusted in a simple manner.

The invention will now be described in more detail with reference to a drawing. In the drawing:
Figures 1a and 1b show a hanging element according to the prior art;
Figures 2a and 2b show one embodiment of the hanging element according to the invention;
Figures 3a and 3b show a second and a third embodiment respectively of the hanging element according to the invention;
Figures 4a and 4b show a fourth embodiment of the hanging element according to the invention;
Figures 5a, 5b and 5c show specific embodiments of the openings in the hanging element according to the invention;

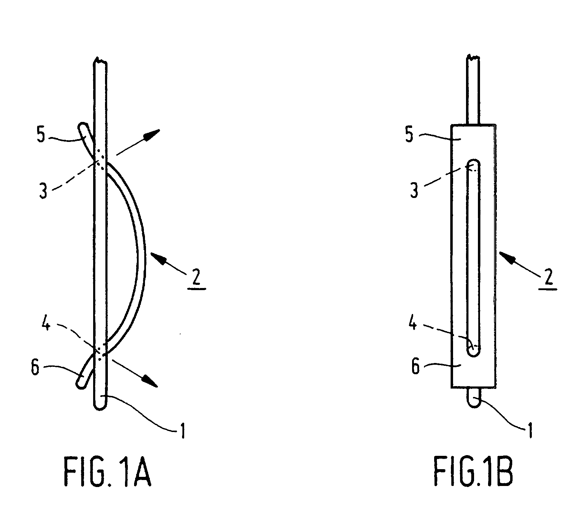

Figures 1a and 1b show a side view and a front view respectively of a hanging element according to the prior art. The hanging element 2 is made up of a strip of a resilient material, one end piece 5 of which is provided with a first opening 3, and the other end piece 6 is provided a second opening 4. When the two end pieces 5 and 6 are moved towards each other by the force of the muscles of a hand, a suspension wire 1 can be passed through the two openings 3 and 4 of the hanging element 2. This suspension wire 1 must be rigid in itself. When subsequently the two end pieces 5 and 6 are released, the hanging element 2 will attempt to straighten itself in the direction indicated by the arrows as a result of its resilience, so that hanging element 2 will wrench itself on the suspension wire 1 at the location of openings 3 and 4. Hanging element 2 extends along suspension wire 1 thereby, with the two openings 3 and 4 being spaced some distance apart. The vertically extending wire 1 will generally be attached to a wall or a ceiling in a known manner with its upper end (not shown). The friction contact between the edges of the two openings 3 and 4 and the circumferential surface of the rigid suspension wire 1, which is obtained as a result of said wrenching, gives the hanging element its carrying capacity. The end piece 5 thereby serves as a hook intended for cooperation with suspension elements of an object to be hung, such as a construction element or a painting. When the two end pieces 5 and 6 are moved towards each other, for example by means of the muscular force of a hand, the wrenching action, and thus the friction contact, will be released, and the hanging element 2 will be freely movable along the rigid suspension wire 1. The height of the object to be hung is thus freely adjustable. The drawback of such a hanging element according to the prior art is, among other things, the fact that it is only suitable for being mounted on a suspension wire 1, which is rigid in itself. It is not possible to use such a hanging element on a flexible suspension wire, since the hanging element is not prevented from straightening itself under the influence of its resilience. Consequently, the hanging element cannot wrench itself on the flexible suspension wire, and it does not possess any carrying capacity. In addition, the vertical adjustment of the hanging element 2 with respect to the suspension wire 1 cannot be done in a user-friendly manner.

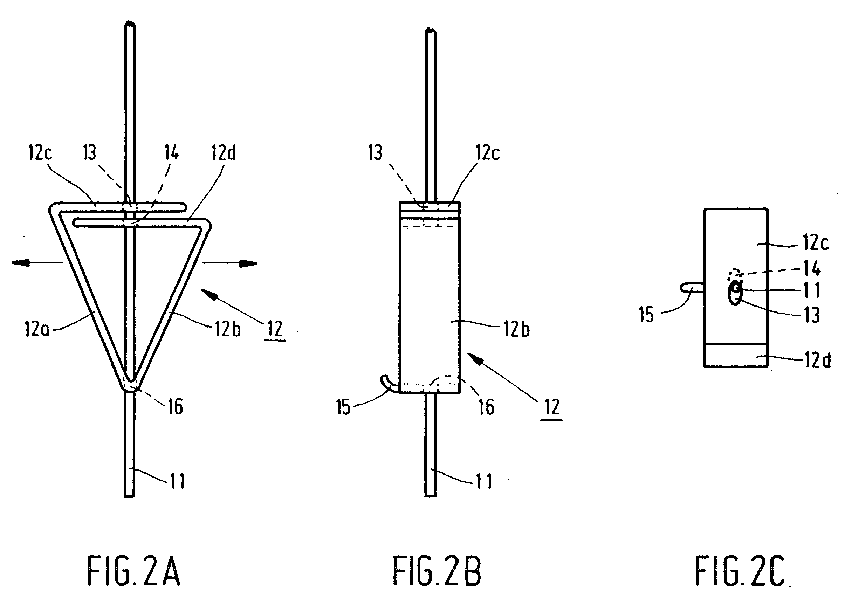

Figures 2a - 2c show an embodiment of a hanging element according to the invention. Hanging element 12 is made up of a strip of a resilient material, and it comprises two legs 12a and 12b, whose end pieces 12c and 12d respectively are bent. As is clearly shown in Figure 2a, the end pieces 12c and 12d are resiliently movable with respect to each other in adjacent parallel planes. End pieces 12c and 12d are provided with a first opening 13 and a second opening 14 respectively. The two openings 13 and 14 can be aligned by pressing the two legs 12a and 12b towards each other by muscular force, thus forming a more or less common passage for suspension wire 11. When subsequently legs 12a and 12b are released, the resilience of the material will cause them to move away from each other in the direction indicated by the arrows, as a result of which the effective diameter of openings 13 and 14 is minimised. Suspension wire 11 is clamped down between the edges of the two openings 13 and 14, and the friction contact thus obtained gives hanging element 12 its carrying capacity.

Hanging element 12 is provided with a lip 15, which extends transversely to the strip, which lip is intended for cooperation with suspension elements of an object. Since the two openings 13 and 14 are located within close proximity of each other, rather than being spaced some distance apart, as is the case with the prior art, the friction contact between the hanging element and the suspension wire is provided more or less by one passage, and the hanging element is also suitable for use in combination with a flexible suspension wire. In addition to that, the "pincher" construction results in a much more user-friendly adjustment of the hanging element 12 along suspension wire 11. As shown in Figure 2c, openings 13 and 14 have a circular section. This makes it easy to pass wire 11 through the common passage that is formed when the two openings 13 and 14 are being aligned by muscular force. In use, the two legs 12a and 12b spring back upon being released, as shown in Figure 2a, and the effective diameter of the passage is minimised and the suspension wire 11 is clamped down between the edges of the two openings 12 and 14.

In addition to that, hanging element 12 is provided with a third opening 16 for passing suspension wire 11 therethrough. In the embodiment of Figure 2a, said third opening is spaced equally far apart from first and second openings 13 and 14. This specific construction of hanging element 12 makes it possible to hang an object, such as a construction element or a painting, in a stable manner.

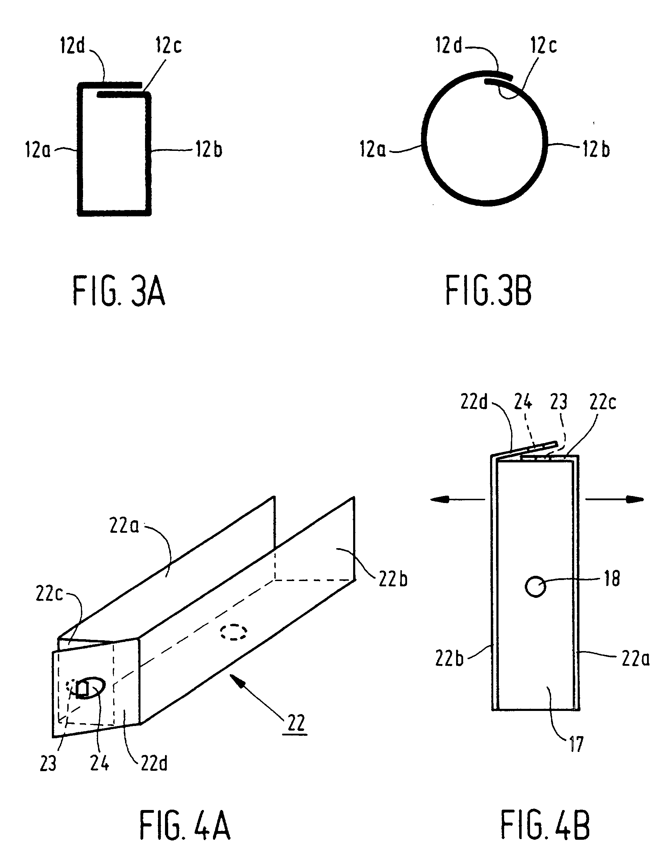

Although legs 12a and 12b are shown to be configured in the form of the legs of a triangle in the embodiment according to Figure 2a, also other embodiments are possible, of course. Thus, legs 12a and 12b may extend parallel to each other, as is diagrammatically shown in Figure 3a, or form part of a circle, as is diagrammatically shown in Figure 3b. Also other configurations may be used, provided the embodiments in question make it possible to move the end pieces 12c and 12d resiliently with respect to each other.

Figures 4a and 4b show another embodiment of the hanging element according to the invention. Similarly to Figures 2a, 2b and 3a, 3b, hanging element 22 is made up of a strip of a resilient material, and it comprises two legs 22a and 22b, whose end pieces 22c and 22d respectively are bent. As is clearly shown in Figure 4a, the end pieces 22c and 22d are resiliently movable with respect to each other in adjacent parallel planes. End pieces 22c and 22d are provided with a first opening 23 and a second opening 24 respectively. The two openings 23 and 24 can be aligned by urging the two legs 22a and 22b towards each other by muscular force, thus forming a more or less common passage for a suspension wire (not shown). When subsequently legs 22a and 22b are released, in use, the resilience of the material will cause them to move away from each other in the direction indicated by the arrows, as a result of which the effective diameter of openings 23 and 24 is minimised. A suspension wire (not shown) is clamped down between the edges of the two openings 23 and 24, and the friction contact thus obtained gives the hanging element 22 its carrying capacity.

As is shown in Figure 4b, the intermediate piece 17 between the two legs 22a and 22b may be provided with an opening 18 for the fixed attachment between the hanging element and an object to be hung, for example a construction element or the rear side of a painting. Said attachment may be a screw/bolt connection, a pop rivet connection, or another suitable connection. The hanging element according to the invention thus functions as a suspension element of the object or the painting, thus realising an alternative yet practical method of hanging the painting. Similarly the object, for example a painting, may be provided with several suspension elements, which may be connected by means of a flexible suspension wire, as a result of which the painting can be hung in various positions and/or at various heights in a simple manner.

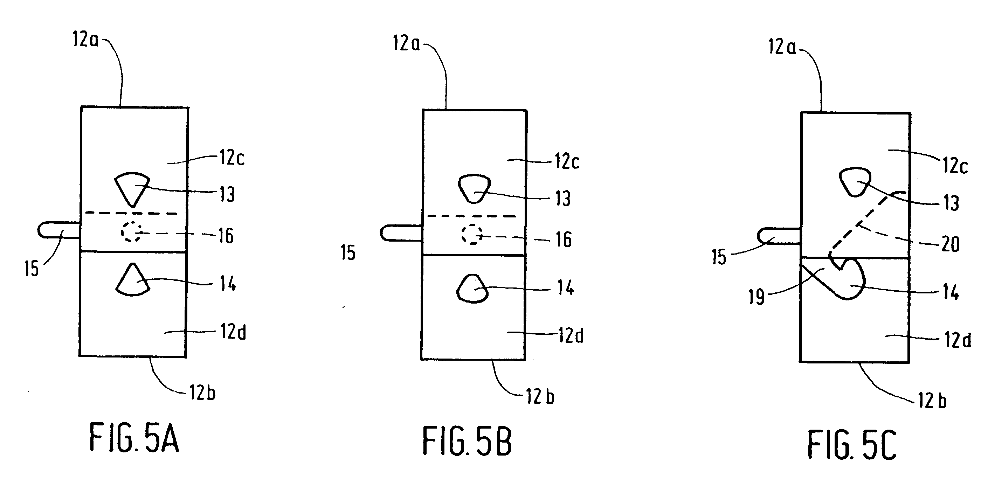

Figures 5a, 5b and 5c show a few embodiments of the first and the second opening of the hanging element of Figures 2a, 2b, 3a, 3b, 4a and 4b. In the embodiment of Figure 5a, the two openings 13 and 14 have a funnel-shaped section, which funnel-shaped sections converge in the direction of the end edges of their respective end pieces 12c and 12d. Thus, the passage formed by openings 13 and 14 has a relatively large diameter when a suspension wire is being provided, which makes it easier to pass a suspension wire (not shown) therethrough. Since the resilience of the hanging element functions to minimise the effective diameter of the common passage in use, the suspension wire is retained in the direction of the converging portions of the funnel-shaped sections of openings 13 and 14, thus providing a proper friction contact.

In order to prevent the edges of the two openings 13 and 14 from cutting into the suspension wire as much as possible, the funnel-shaped sections of the two openings 13 and 14 may be configured such that the converging portion terminates in the form of a segment of a circle. See Figure 5b. The radius of said segment of a circle may thereby be smaller than or identical to half the diameter of the suspension wire being used. Thus, a proper friction contact with the edges of openings 13 and 14 is obtained over the entire circumferential surface of suspension wire 11, as a result of which the hanging element 12 has a large carrying capacity.

The two openings 13 and 14 may have sharp edges. The improved friction contact between the edge of the openings and the circumferential surface of the suspension wire which is thus obtained results in an additionally improved carrying capacity of the hanging element 12.

Figure 5c shows another embodiment of the hanging element. In this embodiment the end piece 12d of the hanging element is provided with a notch 19, which notch terminates in opening 14. In addition to that, the end edge 20 of end piece 12d is bevelled in the direction of notch 19. As a result of the presence of notch 19, a suspension wire (not shown) needs only to be passed through opening 13 when an object is being hung, and not through opening 14 as well, and the suspension wire can simply be hooked into opening 14 via notch 19 in order to provide the hanging element. When the two legs 12a and 12b spring back, the suspension wire is clamped between the edges of the two openings 13 and 14, as already described above. Thus, the height at which the object, for example a painting, is hung can be adjusted in a simple manner. Since the end edge 20 of end piece 12d is bevelled in the direction of notch 19, the suspension wire can be provided in opening 14 in a simple manner, since the end-piece 12d will be self-aligning when the legs 12a and 12b are being moved together. This considerably simplifies the mounting and the vertical adjustment of the hanging element on the suspension wire.

It will be apparent that the invention is not limited to the illustrated embodiments, but that also other embodiments are conceivable, which are considered to fall within the scope of the present invention. Thus, the first and the second opening may have a different sectional configuration, they may for example be rectangular. In addition to that, the lip 15 extending transversely to the strip, which is intended for cooperation with the hanging elements of an object, for example a construction element or a painting, may also be provided at the location of opening 13 or 14.

The hanging element may be made of any type of resilient material, preferably spring steel or another metal. As a result of this, the hanging element can be mass-produced from a basic metal strip by means of a simple cutting operation. The hanging element may also be made of a resilient plastic material.

It will also be apparent that the hanging element can be used for hanging all kinds of objects besides those that have been mentioned above.

## Claims

1. A hanging element (12) which is suitable for hanging objects, such as construction elements, paintings and the like, on a suspension wire (1), which hanging element consists of a strip of a resilient material comprising two resiliently interconnected legs (12a, 12b, 22a, 22b), one end piece (12c, 22c) of which is provided with a first opening (13, 23), and the other end piece (12d, 22d) of which is provided with a second opening (14, 24), which openings are adapted for passing said suspension wire therethrough, and wherein said hanging element is also provided with means for cooperating with suspension elements of the object, wherein the end pieces of each of said legs are bent in a direction towards each other, and that said end pieces are resiliently movable in adjacent parallel planes with respect to each other, so that said first and said second opening can be aligned, thus forming a common passage for the suspension wire, and wherein the resilience of the legs functions to minimise the effective diameter of the passage, as a result of which the edges of the two openings clamp round the suspension wire, **characterized in that** in use the resilience of the legs causes the openings to move away from each other.

2. Hanging element according to claim 1, **characterized in that** at least one opening has a sharp edge.

3. Hanging element according to claim 1 or 2, **characterized in that** the first and/or the second opening are circular.

4. Hanging element according to any one of the claims 1 - 3, **characterized in that** the first and/or the second opening are funnel-shaped.

5. Hanging element according to claim 4, **characterized in that** the funnel-shaped opening converges in the direction of the end edge of the end piece.

6. Hanging element according to claim 4 or 5, **characterized in that** the converging portion of the funnel-shaped opening terminates in the form of a segment of a circle.

7. Hanging element according to claim 6, **characterized in that** the radius of said segment of a circle is smaller than or identical to half the diameter of the suspension wire.

8. Hanging element according to any one of the preceding claims, **characterized in that** the first and/or the second end piece is (are) provided with a notch, which terminates in said opening.

9. Hanging element according to claim 8, **characterized in that** the end edge of the end piece is bevelled in the direction of said notch.

10. Hanging element according to any one of the preceding claims, **characterized in that** said hanging element is provided with a third opening (16) for passing the suspension wire therethrough.

11. Hanging element according to claim 10, **characterized in that** said third opening is spaced equally far apart from said first and from said second opening.

12. Hanging element according to any one of the preceding claims, **characterized in that** said hanging element is provided with a lip (15), which extends transversely to said strip, which lip is intended for cooperation with the suspension elements of the object.

13. Hanging element according to claim 12, **characterized in that** said lip is provided at the location of said first or said second and/or said third opening.

14. Hanging element according to any one of the preceding claims, which is fixedly provided on an object.

## Revendications

1. Elément de suspension (12) qui convient à la suspension d'objets, tels que des éléments de construction, des tableaux et éléments semblables, sur un fil de suspension (1), ledit élément de suspension étant composé d'une bande d'un matériau résilient qui comprend deux branches interconnectées de façon résiliente (12a,12b,22a,22b) dont une pièce d'extrémité (12c,22c) est pourvue d'une première ouverture (13,23) et dont l'autre pièce d'extrémité (12d,22d) est pourvue d'une deuxième ouverture (14,24), lesdites ouvertures étant adaptées pour faire passer à travers ledit fil de suspension, et dans lequel ledit élément de suspension est également pourvu de moyens de coopération avec des éléments de suspension de l'objet, dans lequel les pièces d'extrémité de chacune desdites branches sont recourbées dans une direction de l'une vers l'autre, et lesdites pièces d'extrémité étant déplaçables de façon résiliente dans des plans parallèles adjacents relativement l'une à l'autre, de sorte que lesdites première et deuxième ouvertures peuvent être alignées, formant ainsi un passage commun pour le fil de suspension, et dans lequel la résilience des branches fonctionne pour minimiser le diamètre effectif du passage ; de ce fait, les bords des deux ouvertures se resserrent autour du fil de suspension, **caractérisé en ce que**, lors de l'utilisation, la résilience des branches fait écarter les ouvertures l'une de l'autre.

2. Elément de suspension selon la revendication 1, **caractérisé en ce que** une ouverture au moins a un bord affilé.

3. Elément de suspension selon la revendication 1 ou 2, **caractérisé en ce que** la première et/ou la deuxième ouvertures sont circulaires.

4. Elément de suspension selon l'une quelconque des revendications 1 à 3, **caractérisé en ce que** la première et/ou la deuxième ouvertures sont en forme d'entonnoir.

5. Elément de suspension selon la revendication 4, **caractérisé en ce que** l'ouverture en forme d'entonnoir converge dans la direction du bord d'extrémité de la pièce d'extrémité.

6. Elément de suspension selon la revendication 4 ou 5, **caractérisé en ce que** la partie convergente de l'ouverture en forme d'entonnoir se termine sous forme d'un segment de cercle.

7. Elément de suspension selon la revendication 6, **caractérisé en ce que** le rayon dudit segment de cercle est plus petit que, ou identique à, la moitié du diamètre du fil de suspension.

8. Elément de suspension selon l'une quelconque des revendications précédentes, **caractérisé en ce que** la première et/ou la deuxième pièce(s) d'extrémité est/sont pourvue(s) d'une encoche (19) qui se termine dans ladite ouverture.

9. Elément de suspension selon la revendication 8, **caractérisé en ce que** le bord d'extrémité de la pièce d'extrémité est biseauté dans la direction de ladite encoche.

10. Elément de suspension selon l'une quelconque des revendications précédentes, **caractérisé en ce que** ledit élément de suspension est pourvu d'une troisième ouverture (16) pour faire passer à travers le fil de suspension.

11. Elément de suspension selon la revendication 10, **caractérisé en ce que** ladite troisième ouverture est équidistante de ladite première et de ladite deuxième ouvertures.

12. Elément de suspension selon l'une quelconque des revendications précédentes, **caractérisé en ce que** ledit élément de suspension est pourvu d'une lèvre (15) qui s'étend transversalement relativement à ladite bande, ladite lèvre étant prévue pour coopérer avec les éléments de suspension de l'objet.

13. Elément de suspension selon la revendication 12, **caractérisé en ce que** ladite lèvre est prévue à l'emplacement de ladite première ou de ladite deuxième et/ou de ladite troisième ouverture(s).

14. Elément de suspension selon l'une quelconque des revendications précédentes, qui est prévu de façon fixe sur un objet.

## Patentansprüche

1. Aufhänger (12), der zum Aufhängen von Gegenständen, wie Konstruktionselementen, Bildern u.ä., an einem Aufhängedraht (1) geeignet ist und aus einem Streifen aus einem elastischen Material besteht, der zwei elastisch miteinander verbundene Schenkel (12a, 12b, 22a, 22b) aufweist, von denen ein Endteil (12c, 22c) mit einer ersten Öffnung (13, 23) und das andere Endteil (12d, 22d) mit einer zweiten Öffnung (14, 24) versehen ist, wobei diese Öffnungen zum Durchführen des Aufhängedrahtes geeignet sind und wobei der Aufhänger ferner mit einer Einrichtung zum Zusammenwirken mit Aufhängeelementen des Gegenstandes versehen ist; die Endteile eines jeden Schenkels aufeinander zu gebogen sind und diese Endteile in benachbarten parallelen Ebenen relativ zueinander elastisch bewegbar sind, so daß die erste und zweite Öffnung zueinander ausgerichtet werden können und auf diese Weise einen gemeinsamen Durchgangskanal für den Aufhängedraht bilden, und wobei die Elastizität der Schenkel den wirksamen Durchmesser des Durchgangskanales minimiert, wodurch sich die Ränder der beiden Öffnungen um den Aufhängedraht herum klemmen, **dadurch gekennzeichnet, daß** im Gebrauch die Elastizität der Schenkel bewirkt, daß sich die Öffnungen voneinander weg bewegen.

2. Aufhänger nach Anspruch 1, **dadurch gekennzeichnet, daß** mindestens eine Öffnung einen scharfen Rand besitzt.

3. Aufhänger nach Anspruch 1 oder 2, **dadurch gekennzeichnet, daß** die erste und/oder zweite Öffnung kreisförmig ausgebildet sind.

4. Aufhänger nach einem der Ansprüche 1 bis 3, **dadurch gekennzeichnet, daß** die erste und/oder zweite Öffnung trichterförmig ausgebildet sind.

5. Aufhänger nach Anspruch 4, **dadurch gekennzeichnet, daß** die trichterförmige Öffnung in Richtung des Endrandes des Endteiles konvergiert.

6. Haufhänger nach Anspruch 4 oder 5, **dadurch gekennzeichnet, daß** der konvergierende Abschnitt der trichterförmigen Öffnung in der Form eines Kreissegmentes endet.

7. Aufhänger nach Anspruch 6, **dadurch gekennzeichnet, daß** der Radius des Kreissegmentes kleiner als oder gleich groß wie die Hälfte des Durchmessers des Aufhängedrahtes ist.

8. Aufhänger nach einem der vorangehenden Ansprüche, **dadurch gekennzeichnet, daß** der erste und/oder zweite Endteil mit einer Kerbe (19) versehen sind, die in der Öffnung endet.

9. Aufhänger nach Anspruch 8, **dadurch gekennzeichnet, daß** der Endrand des Endteiles in Richtung der Kerbe abgeschrägt ist.

10. Aufhänger nach einem der vorangehenden Ansprüche, **dadurch gekennzeichnet, daß** er mit einer dritten Öffnung (16) zum Hindurchführen des Aufhängedrahtes versehen ist.

11. Aufhänger nach Anspruch 10, **dadurch gekennzeichnet, daß** die dritte Öffnung von der ersten und der zweiten Öffnung einen gleichen Abstand aufweist.

12. Aufhänger nach einem der vorangehenden Ansprüche, **dadurch gekennzeichnet, daß** er mit einer Lippe (15) versehen ist, die sich in Querrichtung zum Streifen erstreckt und zur Zusammenwirkung mit den Aufhängeelementen des Gegenstandes dient.

13. Aufhänger nach Anspruch 12, **dadurch gekennzeichnet, daß** die Lippe an der Stelle der ersten oder zweiten und/oder dritten Öffnung vorgesehen ist.

14. Aufhänger nach einem der vorangehenden Ansprüche, der fest an einem Gegenstand vorgesehen ist.
